# EUROPÄISCHE PATENTSCHRIFT

(11) **EP 2 384 932 B1**
(45) Veröffentlichungstag und Bekanntmachung des Hinweises auf die Patenterteilung: **12.08.2020**
(21) Anmeldenummer: 11003637.3
(22) Anmeldetag: 04.05.2011
(51) Int. Cl.: B60Q 1/12

(54) **Verfahren zur prädiktiven Ansteuerung eines adaptiven Kurvenlichts und Kraftfahrzeug**
Method for predictive control of an adaptive headlamp and motor vehicle
Procédé de commande prédictive d'un phare de virage adaptatif et véhicule automobile

(30) Priorität: 08.05.2010 DE 102010019835
(43) Veröffentlichungstag der Anmeldung: 09.11.2011
(73) Patentinhaber: Audi AG, 85045 Ingolstadt (DE)
(72) Erfinder: Siedersbeck, Alfons, 94560 Offenberg (DE); Funk, Christian, 85080 Gaimersheim (DE)
(74) Vertreter: Thielmann, Frank

(56) Entgegenhaltungen:
- EP-A1- 2 298 603
- EP-A2- 1 593 936
- DE-A1-102005 022 677
- DE-A1-102007 052 218
- JP-A- 2002 225 618

## Beschreibung

Die Erfindung betrifft ein Verfahren zur prädiktiven Ansteuerung eines adaptiven Kurvenlichts, wobei aus einer Positions- und Fahrtrichtungsinformation eines Kraftfahrzeugs und einem Straßenverlauf die Fahrspurmitte, ein darauf liegender Anpeilpunkt und daraus ein Schwenkwinkel ermittelt wird, um den wenigstens ein Frontscheinwerfer des Kraftfahrzeugs geschwenkt wird, sowie ein zugehöriges Kraftfahrzeug.

Adaptives Kurvenlicht, häufig auch als adaptives Frontbeleuchtungssystem (AFS) bezeichnet, ist bekannt und ermöglicht eine bessere Ausleuchtung der zu befahrenden Strecke beim Durchfahren einer Kurve durch ein Kraftfahrzeug. Dabei sind Kurvenlichtsysteme bekannt, bei welchen aus dem Lenkwinkel und der Geschwindigkeit des Kraftfahrzeugs ein Sollschwenkwinkel der Frontscheinwerfer ermittelt wird. In diesen Fällen wird also nur der aktuelle Fahrzustand des Kraftfahrzeugs berücksichtigt. Hieraus kann jedoch im Allgemeinen nicht geschlussfolgert werden, wie der Straßenverlauf vor dem Kraftfahrzeug aussieht, so dass hierdurch keine optimale Ausleuchtung erfolgen kann.

Daher wurden sogenannte prädiktive adaptive Frontbeleuchtungssysteme (pAFS) bzw. prädiktives adaptives Kurvenlicht vorgeschlagen, bei denen zusätzlich Informationen über den Straßenverlauf vor dem Kraftfahrzeug und eine Positionsinformation des Kraftfahrzeugs berücksichtigt werden. Der Straßenverlauf kann dabei beispielsweise aus einem Navigationssystem bekannt sein, Positions- und Fahrtrichtungsinformationen können über Satellitensysteme, beispielsweise über einen GPS-Sensor, bestimmt werden. Unabhängig davon, woher die Positions- und Fahrtrichtungsinformation und die Information über den zukünftigen Straßenverlauf stammen, ist nun bekannt, wie das Kraftfahrzeug relativ zum Straßenverlauf positioniert und orientiert ist. Der zukünftige Straßenverlauf kann dann folglich mit in die Bestimmung des Schwenkwinkels eingehen. Dazu ist es üblich, eine statische Vorausschau durchzuführen, das bedeutet, es wird ein Anpeilpunkt betrachtet, der von einem ausgezeichneten Punkt des Kraftfahrzeugs - meist dem Mittenpunkt zwischen den insbesondere zwei oder auch vier Frontscheinwerfern - entlang der Fahrspurmitte, die als Trajektorie angenommen wird, um einen festen Abstand beabstandet ist. Als Resultat erhält man eine gegenüber den herkömmlichen, hauptsächlich auf den Lenkwinkel basierenden adaptiven Kurvenlichtsystemen zwar eine Verbesserung, dennoch ist die Kurvenausleuchtung krümmungsabhängig und damit ungleichmäßig.

In der nachveröffentlichten deutschen Patentanmeldung DE 10 2009 041 698 A1 wurde vorgeschlagen, ein hybrides Verfahren zu verwenden, welches zusätzlich zu dem bei der statischen Vorausschau auf der Fahrspurmitte liegenden Anpeilpunkt in manchen Bereichen einen auf einer Fahrspurbegrenzung liegenden Anpeilpunkt betrachtet und damit eine tangentiale Vorausschau mit der statischen Vorausschau kombiniert. Die Übergangsbereiche zwischen den Vorausschauarten stellen sich dabei aber als problembehaftet dar. Denn zum einen kann es zu einer fehlerhaften Detektion des Tangentenpunktes an einer Fahrspurbegrenzung aufgrund von Kartenfehlern kommen, so dass dann ein unnötiger Sprung des Schwenkwinkels mit anschließender Rückführung des Anpeilpunktes auf die Fahrspurmitte erfolgt. Zum anderen ist es grundsätzlich schwierig, den Übergang von dem auf der Fahrspurbegrenzung liegenden Anpeilpunkt auf den auf der Fahrspurmitte liegenden Anpeilpunkt mit korrektem Timing zu realisieren. Ein weiteres Problem der hybriden Vorausschau ist, dass bei großen Radien kein in Reichweite liegender Anpeilpunkt auf der Fahrspurbegrenzung aufgefunden werden kann. Ein anderes hybrides Verfahren wird in EP1593936 A2 vorgeschlagen.

Der Erfindung liegt daher die Aufgabe zugrunde, ein diesbezüglich verbessertes Ansteuerungsverfahren anzugeben, wodurch eine gleichmäßigere und dem Blickverhalten des Fahrers bei Tag eher angepasste Kurvenausleuchtung ermöglicht wird.

Zur Lösung dieser Aufgabe ist bei einem Verfahren der eingangs genannten Art erfindungsgemäß vorgesehen, dass der auf der Fahrspurmitte liegende Anpeilpunkt unter Berücksichtigung des Verlaufs wenigstens einer Fahrspurbegrenzung, insbesondere einer Außenlinie und/oder einer Mittenlinie, bestimmt wird.

Es ist inzwischen bekannt, dass sich der natürliche Blick des Fahrers bei Tage, wenn er eine Kurve durchfährt, hauptsächlich an der Fahrspurbegrenzung orientiert. Mithin wird erfindungsgemäß vorgeschlagen, zwar weiterhin wie bei der statischen Vorausschau grundsätzlich einen Anpeilpunkt auf der als Trajektorie angenommenen Fahrspurmitte zu verwenden, diesem jedoch zumindest zeitweise einen variablen Abstand zuzugestehen, wenn ein als Referenzpunkt bestimmter Anpeilpunkt als endgültiger Anpeilpunkt verwendet wird. Es wird somit eine volladaptive Vorausschau realisiert, die sich über die Berücksichtigung von Fahrspurbegrenzungen letztlich an dem Blickverhalten des Fahrers und dessen Wünschen orientiert.

Denn es wurde festgestellt, dass sich das Blickverhalten eines Fahrers bei Tage häufig gerade an den kurveninneren Fahrspurbegrenzungen - bei einer Rechtskurve beispielsweise einer Randmarkierung, bei einer Linkskurve beispielsweise an der Mittelspurmarkierung - orientiert, so dass das erfindungsgemäße Verfahren, welches ebenso an der Fahrspurbegrenzung orientiert ist, das Blickverhalten des Fahrers widerspiegelt und es somit dem Fahrer vorteilhaft ermöglicht, das selbe Blickverhalten wie bei Tage anzunehmen. Es wird folglich von der statischen Vorausschau des Standes der Technik - soweit möglich - abgegangen, um eine fahrspurbegrenzungsorientierte dynamische Vorausschau mit insbesondere wechselnden Anpeilabständen zu ermöglichen. Damit wird nicht nur gleichmäßigere Kurvenausleuchtung erzielt, sondern auch eher auf das übliche Blickverhalten des Fahrers eingegangen. Da ebenso bei der vorliegenden Erfindung alle letztlich verwendeten Anpeilpunkte auf der Fahrspurmitte liegen, ist kein fehleranfälliger Übergang eines auf einer Fahrspurbegrenzung liegenden Anpeilpunkts zu einem auf der Fahrspurmitte liegenden Anpeilpunkt notwendig; Sprünge werden somit ebenso vermieden.

Abhängig vom Straßenverlauf kann es auftreten, dass, orientiert man sich an den Fahrspurbegrenzungen, ein möglicher Anpeilpunkt nur schwer oder in einem viel zu großen Abstand, beispielsweise die nächste Kurve betreffend, ermittelt werden kann, was zu ungewollten Ergebnissen führen könnte. Mithin wird erfindungsgemäß vorgeschlagen, einen unter Berücksichtigung der Fahrspurbegrenzungen ermittelten Referenzpunkt nur teilweise als Anpeilpunkt zu verwenden, so dass konkret vorgesehen sein kann, dass der Anpeilpunkt wenigstens teilweise unter Berücksichtigung eines Referenzpunktes bestimmt wird, und dass, falls der Abstand von dem Kraftfahrzeug zu dem Referenzpunkt entlang der Fahrspurmitte einen Grenzwert unterschreitet, der Referenzpunkt als Anpeilpunkt verwendet wird, und sonst ein um den Grenzwert von dem Kraftfahrzeug entlang der Fahrspurmitte beabstandeter Anpeilpunkt gewählt wird. Dieser Grenzwert kann beispielsweise zwischen 70 und 100 m insbesondere 80 m, betragen. Er gibt letztlich an, dass für zu weit entfernt bestimmte Referenzpunkte, die beispielsweise den Verlauf der Fahrspurbegrenzung einer erst folgenden Kurve betreffen, aufgrund des Grenzwertes wieder zu einer Art statischen Vorausschau übergegangen wird. Von dieser wird dann abgewichen, sobald ein Referenzpunkt ermittelbar ist, dessen Abstand entlang der Fahrspurmitte kleiner ist als der Grenzwert, so dass in Kurven eine dynamische, insbesondere nicht sprunghafte Anpassung des Abstands des Anpeilpunkts entlang der Fahrspurmitte erreicht werden kann.

Es sei an dieser Stelle noch angemerkt, dass selbstverständlich mit besonderem Vorteil immer sowohl die linke als auch die rechte Fahrspurbegrenzung bei der Ermittlung des Referenzpunkts zu berücksichtigen sind, um sowohl Linkskurven wie auch Rechtskurven ordnungsgemäß behandeln zu können.

Ist auf die beschriebene Weise erst der endgültige Anpeilpunkt bestimmt, sei es als der Referenzpunkt oder in festem Abstand entlang der Fahrspurmitte, so kann dann der Schwenkwinkel ermittelt werden, vorzugsweise, indem der Schwenkwinkel als Winkel zwischen der Fahrtrichtung und einer den Mittelpunkt zwischen den insbesondere zwei Frontscheinwerfern und dem Anpeilpunkt verbindenden Gerade ermittelt wird. In diesem Beispiel wird Bezug auf den Mittelpunkt zwischen den Frontscheinwerfern genommen, um einen Schwenkwinkel zu ermitteln, über den dann unmittelbar die Frontscheinwerfer angesteuert werden können. Es sei an dieser Stelle angemerkt, dass der Mittelpunkt zwischen den Frontscheinwerfern auch als Referenz für die Bestimmung von Abständen entlang der Fahrspurmitte hergenommen werden kann, es sind selbstverständlich diesbezüglich auch andere Varianten möglich, so lange eine konsistente Bestimmung des Abstands beziehungsweise des Schwenkwinkels erfolgt.

Eine Ansteuerung der Frontscheinwerfer erfolgt im erfindungsgemäßen Verfahren immer dann, wenn sich der Schwenkwinkel verändert, also eine Veränderung der Abstrahlrichtung der Frontscheinwerfer erforderlich ist. Die Messdaten umfassenden Informationen zur Position, Fahrtrichtung und zum Straßenverlauf werden mithin auf eine bislang unbekannte Art und Weise ausgewertet, um eine verbesserte Ansteuerung der schwenkbaren Frontscheinwerfer zu erreichen.

Der Begriff "Fahrspurbegrenzung" ist hier weit zu verstehen. Es kann durchaus auch eine virtuelle Fahrspurbegrenzung betrachtet werden, die beispielsweise fest beabstandet von einer tatsächlichen Fahrspurbegrenzung angenommen wird, um das Blickverhalten des Fahrers besser abbilden zu können. So hat sich beispielsweise gezeigt, dass bei Rechtsverkehr zumindest ein Teil der Probanden eine Orientierung an der linken Außenlinie bei einer zweispurigen Straße mit Gegenverkehr fortzieht, so dass dann vorgesehen sein kann, dass eine ähnlich der linken Außenlinie beabstandete virtuelle rechte Fahrspurbegrenzung ermittelt und betrachtet wird.

Zur konkreten Bestimmung des Referenzpunkts kann in besonders vorteilhafter Ausgestaltung der vorliegenden Erfindung vorgesehen sein, dass die Verbindungslinie zwischen einem vorbestimmten Bezugspunkt des Kraftfahrzeugs, insbesondere der Position des Fahrers, und dem Referenzpunkt im Wesentlich eine Tagente an die Fahrspurbegrenzung bildet. Die Orientierung des Fahrers an der Fahrspurbegrenzung wird also so abgebildet, dass letztlich eine Tangente an diese Fahrspurbegrenzung betrachtet wird. Dabei kann als vorbestimmter Bezugspunkt des Kraftfahrzeugs vorteilhafterweise die Position des Fahrers gewählt werden, da letztlich dessen Blickverhalten abgebildet wird, wie sich bei der Entwicklung der vorliegenden Erfindung zeigte. Über die Tangente orientiert sich das erfindungsgemäße Verfahren an der Fahrspurbegrenzung und bildet das Blickverhalten des Fahrers ab. Dabei sei hier nochmals ausdrücklich daraufhingewiesen, dass, wie auch durch die Formulierung "im Wesentlichen eine Tangente" klargestellt, es sich beim erfindungsgemäßen Verfahren nicht exakt um die Tangente handeln muss, da viele Realisierungen moderner Berechnungsalgorithmen von einer "Rasterung" des Raums ausgehen, so dass die tatsächliche Tangente, die allein einen Berührpunkt mit der Fahrspurbegrenzung aufweist, nicht immer exakt getroffen werden kann, so dass auch unmittelbar benachbarte, noch keinen oder gar zwei Schnittpunkte mit der Fahrspurbegrenzung aufweisende Verbindungslinien als Tangenten angesehen werden können, wenn dies der Arbeitgenauigkeit entspricht.

Hier sind nun zwei Ausgestaltungen denkbar. Zum einen kann vorgesehen sein, dass eine von dem Bezugspunkt ausgehende Tangente an die Fahrspurbegrenzung ermittelt wird, deren Verlängerung einen den Referenzpunkt bildenden Schnittpunkt mit der Fahrspurmitte aufweist. Während dieses Verfahren das exakteste ist, weist es jedoch den Nachteil auf, dass aufgrund des nicht vorhersagbaren funktionalen Verlaufs der Fahrspurbegrenzung die Tangente in den meisten Fällen eher komplex und aufwendig zu bestimmen sein dürfte. Es wird also in dieser Ausführungsform zunächst überprüft, ob von dem vorbestimmten Bezugspunkt im Kraftfahrzeug ausgehend eine Tangente an einen der Fahrspurbegrenzungen gelegt werden kann. Diese Tangente wird dann vom Kraftfahrzeug ausgehend über den Berührpunkt solange verlängert, bis sie die Fahrspurmitte das erste Mal schneidet. Dieser Punkt wird dann als Referenzpunkt bestimmt.

In einer bevorzugten Ausführungsform kann alternativ vorgesehen sein, dass zur Ermittlung des Referenzpunkts ein um einen Startabstand von dem Kraftfahrzeug entlang der Fahrspurmitte auf der Fahrspurmitte liegender Testpunkt gewählt wird und der Abstand des Testpunkts von dem Kraftfahrzeug solange erhöht wird, bis ein Abbruchkriterium erreicht ist oder wenigstens ein Berührungs- und/oder Schnittpunkt der den Bezugspunkt mit dem Testpunkt verbindenden Linie mit der oder einer Fahrspurbegrenzung vorliegt, wobei der zuletzt bestimmte Testpunkt den Referenzpunkt bildet. Bei diesem Verfahren wird also in jedem Zeitschritt, also immer dann, wenn der Schwenkwinkel überprüft beziehungsweise neu ermittelt werden soll, wobei ein Zeitschritt beispielsweise 20 ms betragen kann, die Suche nach einem geeigneten Referenzpunkt initialisiert, indem ein Testpunkt gewählt wird, der von dem Kraftfahrzeug entlang der Fahrspurmitte um einen Startabstand beabstandet ist und selbstverständlich selber auf der Fahrspurmitte liegt. Für diesen wird dann bereits überprüft, ob die den Bezugspunkt mit dem Testpunkt verbindende Linie einen Berührungs- und/oder Schnittpunkt mit einer der Fahrspurbegrenzungen aufweist. Ist dies nicht der Fall, so wird der Testpunkt um einen vorbestimmten Betrag, beispielsweise 4 m, weiter beabstandet, und es wird wiederum überprüft, ob Berührungs- und/oder Schnittpunkte vorliegen. Ist dies der Fall, ist die Tangente (beziehungsweise die der Tangente am nächsten liegende Linie im Sinne dieser Vorgehensweise) gefunden, so dass der zuletzt bestimmte Testpunkt den Referenzpunkt bilden kann. Selbstverständlich kann vorgesehen sein, dass bei Verwendung eines Grenzwerts, wie bereits beschrieben, die Suche nach dem Referenzpunkt dann abgebrochen wird, wenn der Abstand des Testpunkts von dem Kraftfahrzeug entlang der Fahrspurmitte den Grenzwert erreicht oder überschreitet, da dann ja ohnehin als Anpeilpunkt der um den Grenzwert beabstandete Punkt verwendet werden würde. Auf diese Weise ist das Verfahren einfach und wenig rechenaufwendig realisierbar und führt dennoch zu deutlich verbesserten Ergebnissen bei der Bestimmung des Schwenkwinkels.

Zur Ermittlung der Positionsinformation und/oder der Fahrtrichtungsinformation kann ein insbesondere satellitengestützter Positionssensor, insbesondere ein GPS-Sensor, verwendet werden. Solche Systeme sind weitgehend bekannt und insbesondere in Kombination mit einem Navigationssystem häufig in Kraftfahrzeugen verbaut. Sie bestimmen die Position und Orientierung des Kraftfahrzeugs äußerst genau.

Vorteilhaft ergänzt werden kann dies folglich, wenn der Straßenverlauf aus einem Navigationssystem bestimmt wird. Häufig ist bei Navigationssystemen und ihren Kartendaten der Straßenverlauf nur als Mittellinie vorgegeben. Daher kann mit besonderem Vorteil beim erfindungsgemäßen Verfahren vorgesehen sein, dass die Spurbreite mittels wenigstens eines Sensors bestimmt und zur Bestimmung der Spurbegrenzungen verwendet wird. Beispielsweise können hierzu Sensoren eines sogenannten Spurhaltesystems ("lane departure warning") genutzt werden, jedoch sind auch andere Möglichkeiten denkbar, wie beispielsweise Straßenbegrenzungen optisch oder anderweitig aufnehmen, wobei die Fahrspurbreite beispielsweise anhand einer Bildverarbeitung ermittelt werden kann.

Grundsätzlich sind selbstverständlich auch andere Möglichkeiten denkbar, die Position des Kraftfahrzeugs, die Fahrtrichtung und den zukünftigen Straßenverlauf zu ermitteln. Beispielsweise kann eine Kamera, insbesondere eine Stereokamera, vorgesehen werden, über die durch eine Bildverarbeitung der zukünftige Straßenverlauf ermittelt wird oder dergleichen. Nachtsichtkameras lassen sich dabei besonders vorteilhaft einsetzen. Es sind daher grundsätzlich verschiedene Möglichkeiten denkbar, die für das erfindungsgemäße Verfahren benötigten Informationen zu erhalten.

Neben dem erfindungsgemäßen Verfahren betrifft die Erfindung auch ein Kraftfahrzeug, umfassend wenigstens einen, insbesondere zwei, schwenkbaren Frontscheinwerfer und ein den Frontscheinwerfer ansteuerndes Steuergerät, welches zur Durchführung des erfindungsgemäßen Verfahrens ausgebildet ist. Das Kraftfahrzeug umfasst mithin auch Mittel, um die Position des Kraftfahrzeugs, seine Fahrtrichtung und den zukünftigen Straßenverlauf zu ermitteln, so dass die Eingangsgrößen für das erfindungsgemäße Verfahren bekannt sind. Dann kann rechnerisch ermittelt werden, welcher Anpeilpunkt verwendet werden soll, woraus dann ein Schwenkwinkel ermittelt werden kann, mit welchem die Frontscheinwerfer entsprechend angesteuert werden. Dabei gelten die oben bezüglich des erfindungsgemäßen Verfahrens getätigten Ausführungen analog für das erfindungsgemäße Kraftfahrzeug, so dass dieses insbesondere einen Positionssensor, insbesondere einen GPS-Sensor, und/oder ein Navigationssystem und/oder einen Sensor zur Ermittlung der Spurbreite umfassen kann. Diese stehen dann in Kommunikationsverbindung, beispielsweise über ein Bussystem, insbesondere einen CAN-Bus, mit dem Steuergerät, so dass die Informationen im Rahmen des erfindungsgemäßen Verfahrens genutzt werden können.

Weitere Vorteile und Einzelheiten der vorliegenden Erfindung ergeben sich aus den im Folgenden dargestellten Ausführungsbeispielen sowie anhand der Zeichnung. Dabei zeigen:
- Fig. 1: ein erfindungsgemäßes Kraftfahrzeug,
- Fig. 2: einen Ablaufplan einer Ausführungsform des erfindungsgemäßen Verfahrens,
- Fig. 3: eine Illustration zur Bestimmung des Referenzpunktes, und
- Fig. 4: eine Illustration zu einer zweiten Ausführungsform des erfindungsgemäßen Verfahrens.

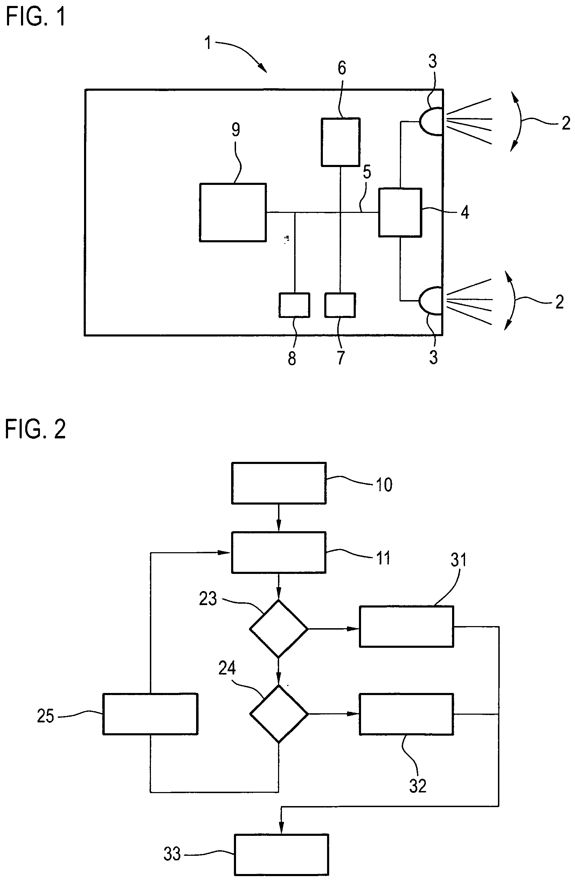

Fig. 1 zeigt ein erfindungsgemäßes Kraftfahrzeug 1. Es umfasst zwei gemäß der Pfeile 2 verschwenkbare Frontscheinwerfer 3, die über ein Steuergerät 4 angesteuert werden können, welches zur Durchführung des erfindungsgemäßen Verfahrens ausgebildet ist, mithin eine volladaptive Vorausschau durchführen kann. Über ein Bussystem 5, insbesondere ein CAN-Bus, ist das Steuergerät 4 mit einem Navigationssystem 6, einem GPS-Sensor 7, einem Sensor 8 zur Ermittlung der Fahrspurbreite und weiteren bei 9 angedeuteten Fahrzeugsystemen verbunden.

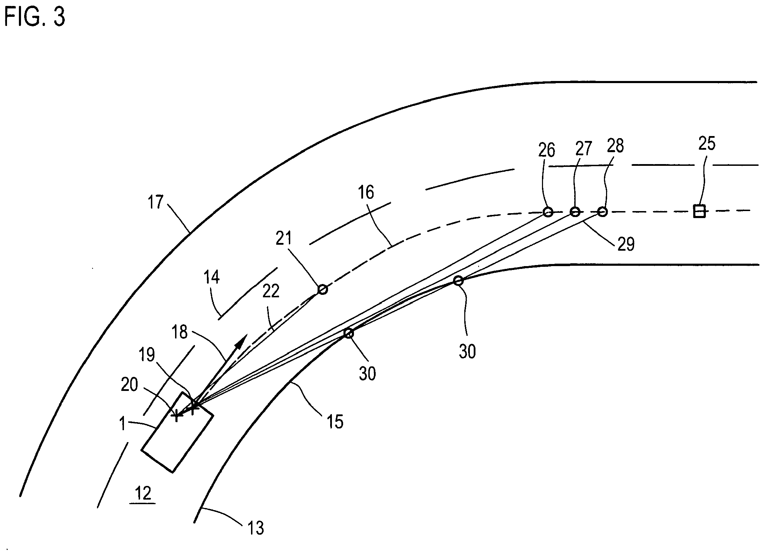

Das erfindungsgemäße Verfahren beruht grundsätzlich darauf, dass statt der bekannten statischen Vorausschau unter Berücksichtigung der Fahrspurbegrenzungen wenigstens teilweise der Abstand des Kraftfahrzeugs 1 zum Anpeilpunkt variiert werden kann. Eine erste Ausführungsform des erfindungsgemäßen Verfahrens wird im Hinblick auf die Figuren 2 und 3 näher erläutert.

Dabei werden zunächst in einem Schritt 10 eine Positions- und Fahrtrichtungsinformation aufgrund des GPS-Sensors 7 und ein Straßenverlauf ermittelt. Aus dem Navigationssystem 6 ist der zukünftige Straßenverlauf in Form einer Mittellinie bekannt, durch den Sensor 8 zur Ermittlung der Spurbreite kann zudem auch die rechte Außenlinie ermittelt werden. Zudem wird als zukünftige Trajektorie des Kraftfahrzeugs noch die Fahrspurmitte ermittelt.

In den nun folgenden Schritten soll der geeignete Anpeilpunkt aufgefunden werden, auf dessen Grundlage der Schwenkwinkel der Frontscheinwerfer 3 berechnet wird. Die Art der Bestimmung des Anpeilpunkts wird im Hinblick auf Fig. 3 näher erläutert.

Fig. 3 zeigt das Kraftfahrzeug 1 auf einer Fahrspur 12 einer Straße 13. Dabei bilden die Mittellinie 14 und die rechte Außenlinie 15 die Fahrspurbegrenzungen, wobei zusätzlich als vermutliche Trajektorie die Fahrspurmitte 16, welche genau zwischen der Mittellinie 14 und der rechten Außenlinie 15 liegt, eingezeichnet ist. Ferner ist die linke Außenlinie 17 zu sehen.

Die Fahrtrichtung des Kraftfahrzeugs 1 wird durch den Pfeil 18 angedeutet.

Innerhalb des Kraftfahrzeugs 1 sind zwei ausgezeichnete Punkte zu erkennen, nämlich zum einen der Mittenpunkt 19 zwischen den schwenkbaren Frontscheinwerfern 3 und ein vorbestimmter Bezugspunkt 20, der die Position des Fahrers im Kraftfahrzeug 1 angibt. Der Mittenpunkt 19 wird dabei verwendet, wenn ein Abstand eines Punktes entlang der Fahrspurmitte 16 ermittelt werden soll.

Im vorliegenden Beispiel wird nun in Schritt 11 ein erster Testpunkt 21 auf der Fahrspurmitte 16 betrachtet, der einen Startabstand weit von dem Mittenpunkt 19, also dem Kraftfahrzeug 1, entlang der Fahrspurmitte 16 beabstandet ist. In Schritt 11 wird nun die Verbindungslinie 22 zwischen dem Testpunkt 21 und dem Bezugspunkt 20 betrachtet.

In einem Schritt 23 wird dann überprüft, ob die Verbindungslinie 22 einen Berührungspunkt oder Schnittpunkte mit einer die Fahrspurbegrenzungen, im vorliegenden Ausführungsbeispiel die Mittellinie 14 oder die rechte Außenlinie 15, aufweist. Dies ist beim Testpunkt 21 ersichtlich nicht der Fall, so dass mit Schritt 24 fortgefahren wird, wo überprüft wird, ob der Abstand entlang der Fahrspurmitte 16 für den Testpunkt 21 einen vorgegebenen Grenzwert überschreitet. Der diesem Grenzwert, hier 80 m, entsprechende Abstand wird in Fig. 3 durch den Kasten 25 dargestellt.

Da der Punkt 21 einen kleineren Abstand als den Grenzwert zum Kraftfahrzeug 1 aufweist, konkret den Mittenpunkt 19, wird bei Schritt 25 fortgefahren, wo ein neuer Testpunkt mit einem um einen bestimmten Wert erhöhten Abstand auf der Fahrspurmitte 16 bestimmt wird. Der vorgegebene Wert kann beispielsweise 4 m betragen.

Für diesen neu bestimmten Testpunkt wird wiederum in Schritt 11 die Verbindungslinie zum Bezugspunkt 20 bestimmt und es werden die Überprüfungen in den Schritten 23 und 24 vorgenommen.

In weiteren Schritten betrachtete Testpunkte sind in Fig. 3 bei 26, 27 und 28 dargestellt. Während die Testpunkte 26 und 27 jeweils eine Verbindungslinie aufzeigen, die die rechte Außenlinie 15 noch nicht schneidet, ändert sich dies beim Testpunkt 28. In der diesem zugeordneten Verbindungslinie 29, die dann im Wesentlichen einer Tangente an die rechte Außenlinie 15 entspricht, werden im Schritt 23 zwei Schnittpunkte 30 festgestellt.

Dies bedeutet in der Nomenklatur des erfindungsgemäßen Verfahrens, dass der Punkt 28 als Referenzpunkt bestimmt wird, worauf dann in einem Schritt 31 dieser zuletzt bestimmte Testpunkt 28 auch als der Anpeilpunkt festgesetzt wird.

Während es in dem Beispiel in Fig. 3 ersichtlich möglich ist, einen Referenzpunkt zu bestimmen, der vor dem um den Grenzwert vom Kraftfahrzeug 1 beabstandeten Kasten 25 liegt, können auch Fälle auftreten, in denen keine Berührungs- beziehungsweise Schnittpunkte gefunden wurden, bis der Abstand des Testpunkts vom Kraftfahrzeug 1 als gleich dem oder den Grenzwert überschreitend festgestellt wird, vgl. die Abfrage in Schritt 24. Ist dies einmal der Fall, so wird in einem Schritt 32 der Anpeilpunkt so bestimmt, dass er um den Grenzwert entlang der Fahrspurmitte 16 von dem Kraftfahrzeug 1 beabstandet ist.

Der im Schritt 31 oder 32 bestimmte Anpeilpunkt wird dann im Schritt 33 entsprechend genutzt, um einen Schwenkwinkel zu bestimmen. Dazu wird der Winkel zwischen der Fahrtrichtung (vgl. Pfeil 18) und der den Mittenpunkt 19 zwischen den Frontscheinwerfern 3 und dem Anpeilpunkt verbindenden Geraden ermittelt. Um diesen Winkel werden dann, ebenso in Schritt 33, die Frontscheinwerfer 3 ausgelenkt. Dann beginnt das Verfahren im nächsten Zeitschritt, beispielsweise nach 20 ms, wieder mit dem Schritt 10.

So wird eine volladaptive, auf das Blickverhalten des Fahrers angepasste Ansteuerung des adaptiven Kurvenlichts erreicht.

Es sei an dieser Stelle noch angemerkt, dass nicht unbedingt die Mittellinie 14 und die rechte Außenlinie 15 als Fahrspurbegrenzungen verwendet werden müssen. Es ist genauso gut denkbar, beispielsweise die linke Außenlinie 17 und/oder eine von der rechten Außenlinie 15 weiter beabstandete virtuelle Fahrspurbegrenzung zu verwenden, um so ein noch erlebbareres Kurvenlicht zu gestalten.

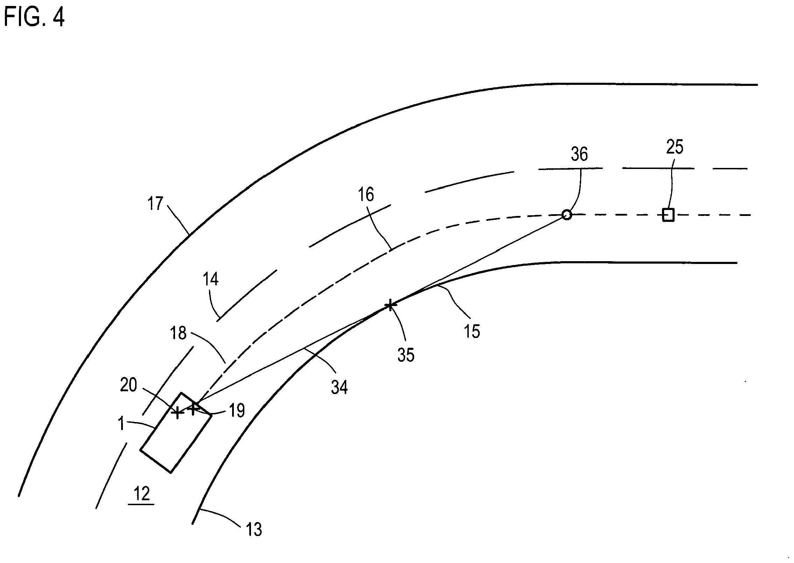

Eine zweite Ausführungsform des erfindungsgemäßen Verfahrens, die alternativ zur ersten Ausführungsform genutzt werden kann, wird durch Fig. 4 näher erläutert. Dort ist wiederum das Kraftfahrzeug 1 auf der Fahrspur 12 der Straße 13 gezeigt. In dieser Ausführungsform wird nun in jedem Zeitschritt die Tangente 34 an die entsprechende Fahrspurbegrenzung, hier die rechte Außenlinie 15, berechnet, die diese folglich in einem Tangentenpunkt 35 berührt. Über diesen Tangentenpunkt 35 hinaus wird die Tangente 34 nun verlängert, bis sie die Fahrspurmitte 16 in einem Referenzpunkt 36 trifft.

Erneut wird nun der Abstand entlang der Fahrspurmitte 16 von dem Kraftfahrzeug 1, also dem Mittenpunkt 19, und dem Referenzpunkt 36 betrachtet. Ist er kleiner als der Grenzwert, wie im Fall von Fig. 4 gezeigt, wo wiederum der Kasten 25 den Grenzwertabstand markiert, so ist der Referenzpunkt 36 der Anpeilpunkt. Im anderen Fall wäre wiederum ein Anpeilpunkt zu wählen, der den Grenzwert als Abstand entlang der Fahrspurmitte 16 aufweist.

## Patentansprüche

1. Verfahren zur prädiktiven Ansteuerung eines adaptiven Kurvenlichts, wobei aus einer Positions- und Fahrtrichtungsinformation eines Kraftfahrzeugs (1) und einem Straßenverlauf die Fahrspurmitte (16), ein darauf liegender Anpeilpunkt und daraus ein Schwenkwinkel ermittelt wird, um den wenigstens ein Frontscheinwerfer (3) des Kraftfahrzeugs (1) geschwenkt wird,
**dadurch gekennzeichnet,**
**dass** der auf der Fahrspurmitte (16) liegende Anpeilpunkt unter Berücksichtigung des Verlaufs wenigstens einer Fahrspurbegrenzung, insbesondere einer Außenlinie (15) und/oder einer Mittenlinie (14), bestimmt wird, wobei der Anpeilpunkt wenigstens teilweise unter Berücksichtigung eines auf der Fahrspurmitte (16) liegenden Referenzpunktes bestimmt wird, wobei die Verbindungslinie (29) zwischen einem vorbestimmten Bezugspunkt (20) des Kraftfahrzeuges, insbesondere der Position des Fahrers, und dem Referenzpunkt im Wesentlichen eine Tangente (34) an die Fahrspurbegrenzung bildet, wobei, falls der Abstand von dem Kraftfahrzeug zu dem Referenzpunkt entlang der Fahrspurmitte (16) einen Grenzwert unterschreitet, der Referenzpunkt als Anpeilpunkt verwendet wird, und sonst ein um den Grenzwert von dem Kraftfahrzeug entlang der Fahrspurmitte (16) beabstandeter Anpeilpunkt gewählt wird.

2. Verfahren nach Anspruch 1, **dadurch gekennzeichnet, dass** eine von dem Bezugspunkt (20) ausgehende Tangente (34) an die Fahrspurbegrenzung ermittelt wird, deren Verlängerung einen den Referenzpunkt bildenden Schnittpunkt mit der Fahrspurmitte (16) aufweist.

3. Verfahren nach Anspruch 1, **dadurch gekennzeichnet, dass** zur Ermittlung des Referenzpunkts ein um einen Startabstand von dem Kraftfahrzeug entlang der Fahrspurmitte (16) auf der Fahrspurmitte (16) beabstandet liegender Testpunkt (21, 26, 27, 28) gewählt wird und der Abstand des Testpunkts (21) von dem Kraftfahrzeug entlang der Fahrspurmitte (16) so lange erhöht wird, bis ein Abbruchkriterium erreicht ist oder wenigstens ein Berührungspunkt (35) oder Schnittpunkt (30) der den Bezugspunkt (20) mit dem Testpunkt (21) verbindenden Linie (29) mit der oder einer Fahrspurbegrenzung vorliegt, wobei der zuletzt bestimmte Testpunkt (21, 26, 27, 28) den Referenzpunkt bildet.

4. Verfahren nach einem der vorangehenden Ansprüche, **dadurch gekennzeichnet, dass** zur Ermittlung der Positionsinformation und/oder der Fahrtrichtungsinformation ein insbesondere satellitengestützter Positionssensor, insbesondere ein GPS-Sensor (7), verwendet wird.

5. Verfahren nach einem der vorangehenden Ansprüche, **dadurch gekennzeichnet dass** der Straßenverlauf aus einem Navigationssysterrl. (6) bestimmt wird.

6. Verfahren nach Anspruch 5, **dadurch gekennzeichnet, dass** bei einem aus dem Navigationssystem (6) nur als Mittellinie (14) der Straße (13) vorgegebenen Straßenverlauf die Spurbreite mittels wenigstens eines Sensor (8) bestimmt und zur Bestimmung der Fahrspurbegrenzungen verwendet wird.

7. Kraftfahrzeug (1), umfassend wenigstens einen, insbesondere zwei, schwenkbaren Frontscheinwerfer (3) und ein den Frontscheinwerfer ansteuerndes Steuergerät (4), ausgebildet zur Durchführung des Verfahrens nach einem der vorangehenden Ansprüche.

## Claims

1. Method for the predictive control of an adaptive bending light, wherein from position and travelling direction information of a motor vehicle (1) and a course of the road the centre of the lane (16), a target point on the latter is determined and from the latter a pivot angle, about which at least one front headlight (3) of the motor vehicle (1) is pivoted,
**characterised in that**
the target point on the centre of the lane (16) is determined taking into account the path of at least one lane boundary, in particular an outer line (15) and/or a centre line (14), wherein
the target point is determined at least partly taking into account a reference point on the centre of the lane (16), wherein the connecting line (29) between a predetermined reference point (20) of the motor vehicle, in particular the positon of the driver, and the reference point forms essentially a tangent (34) to the lane boundary, wherein if the distance from the motor vehicle to the reference point along the centre of the lane (16) falls below a threshold, the reference point is used as the target point and otherwise a target point is selected which is spaced apart from the motor vehicle by the threshold along the centre of the lane (16).

2. Method according to claim 1, **characterised in that** a tangent (34) to the lane boundary from the reference point (20) is determined, the extension of which has an intersection point with the centre of the lane (16) forming the reference point.

3. Method according to claim 1, **characterised in that** for determining the reference point a test point (21, 26, 27, 28) is selected which is spaced apart on the centre of the lane (16) by a start distance from the motor vehicle along the centre of the lane (16) and the distance of the test point (21) from the motor vehicle is increased along the centre of the lane (16) until an abort criterion is reached or there is at least one contact point (35) or point of intersection (30) of the line (29) connecting the reference point (20) to the test point (21) with the or a lane boundary, wherein the test point (21, 26, 27, 28) determined last forms the reference point.

4. Method according to any of the preceding claims, **characterised in that** for determining the position information and/or travelling direction information an in particular satellite-supported position sensor is used, in particular a GPS sensor (7).

5. Method according to any of the preceding claims, **characterised in that** the course of the road is determined from a navigation system (6).

6. Method according to claim 5, **characterised in that** with a course of the road predetermined from the navigation system (6) only as a centre line (14) of the road (13), the lane width is determined by means of at least one sensor (8) and is used for determining the lane boundaries.

7. Motor vehicle (1), comprising at least one, in particular two, pivotable front headlights (3) and a control device (4) controlling the front headlight, designed for performing the method according to any of the preceding claims.

## Revendications

1. Procédé de commande prédictive d'un phare de virage adaptatif, dans lequel à partir d'une information de position et de direction d'un véhicule automobile (1) et d'un tracé de route, le milieu de la voie (16), un point de visée situé dessus et à partir de là un angle de pivotement est déterminé, duquel l'au moins un phare avant (3) du véhicule automobile (1) est pivoté,
**caractérisé en ce**
**que** le point de visée situé sur le milieu de la voie (16) est déterminé en tenant compte du tracé d'au moins une délimitation de voie, en particulier d'une ligne extérieure (15) et/ou d'une ligne centrale (14), dans lequel le point de visée est déterminé au moins en partie en tenant compte d'un point de référence situé sur le milieu de la voie (16), dans lequel la ligne de raccordement (29) entre un point de repère (20) prédéterminé du véhicule automobile, en particulier la position du conducteur, et le point de référence forme sensiblement une tangente (34) à la délimitation de voie, dans lequel, si la distance du véhicule automobile au point de référence le long du milieu de la voie (16) passe sous une valeur limite, le point de référence est utilisé en tant que point de visée, et sinon un point de visée espacé de la valeur limite du véhicule automobile le long du milieu de la voie (16) est sélectionné.

2. Procédé selon la revendication 1, **caractérisé en ce qu'**une tangente (34) partant du point de repère (20) à la délimitation de voie est déterminée, dont le prolongement présente un point d'intersection formant le point de référence avec le milieu de la voie (16).

3. Procédé selon la revendication 1, **caractérisé en ce que** pour la détermination du point de référence, un point de test (21, 26, 27, 28) situé espacé d'une distance de départ du véhicule automobile le long du milieu de la voie (16) sur le milieu de la voie (16) est sélectionné et la distance du point de test (21) du véhicule automobile le long du milieu de la voie (16) est augmentée jusqu'à ce qu'un critère d'interruption soit atteint ou au moins un point de contact (35) ou point d'intersection (30) de la ligne (29) reliant le point de repère (20) au point de test (21) avec la ou une délimitation de voie est présent, dans lequel le point de test (21, 26, 27, 28) déterminé en dernier forme le point de référence.

4. Procédé selon l'une quelconque des revendications précédentes, **caractérisé en ce que** pour la détermination de l'information de position et/ou de l'information de direction un capteur de position en particulier satellitaire, en particulier un capteur GPS (7), est utilisé.

5. Procédé selon l'une quelconque des revendications précédentes, **caractérisé en ce que** le tracé de route est déterminé à partir d'un système de navigation (6).

6. Procédé selon la revendication 5, **caractérisé en ce que** dans le cas d'un tracé de route prédéfini à partir du système de navigation (6) seulement en tant que ligne médiane (14) de la route (13), la largeur de voie est déterminée au moyen d'au moins un capteur (8) et est utilisée pour la détermination des délimitations de voie.

7. Véhicule automobile (1), comprenant au moins un, en particulier deux, phare avant (3) pivotant et un dispositif de commande (4) commandant le phare avant, réalisé pour la réalisation du procédé selon l'une quelconque des revendications précédentes.
